(19) Europäisches Patentamt
European Patent Office
Office européen des brevets

(11) **EP 4 108 644 A1**

(12) **EUROPEAN PATENT APPLICATION**

(43) Date of publication:
**28.12.2022 Bulletin 2022/52**

(21) Application number: **22179705.3**

(22) Date of filing: **17.06.2022**

(51) International Patent Classification (IPC):
**C04B 26/28** (2006.01)    **C04B 28/04** (2006.01)
**C04B 103/00** (2006.01)

(52) Cooperative Patent Classification (CPC):
(C-Sets available)
**C04B 26/28; C04B 28/04;** C04B 2103/0028  (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.06.2021 IT 202100016091**

(71) Applicants:
• **Nanomnia Srl**
  **37059 Perzacco di Zevio (VR) (IT)**
• **ITALCEMENTI S.p.A.**
  **24126 Bergamo (IT)**

(72) Inventors:
• **BERARDI, Roberto**
  **20098 S.GIULIANO MILANESE (MI) (IT)**

• **CAPONE, Claudia**
  **24124 BERGAMO (IT)**
• **CACCIATORE, Andrea**
  **24068 SERIATE (BG) (IT)**
• **BOVI, Michele**
  **37100 VERONA (IT)**
• **FACCIOTTI, Camilla**
  **37014 CASTELNUOVO DEL GARDA (VR) (IT)**
• **VACCARI, Pietro**
  **37100 VERONA (IT)**
• **BONACONSA, Marta**
  **37059 PERZACCO DI ZEVIO (VR) (IT)**

(74) Representative: **De Sandre, Emanuele**
  **Studio Bonini Srl**
  **Corso Fogazzaro, 8**
  **36100 Vicenza (IT)**

(54) **METHOD OF MICROGRANULATION OF POWDER PARTICLES OF MINERAL FILLERS FOR CONSTRUCTION USE**

(57)     Method of microgranulation of powder particles of mineral fillers for construction, comprising the following steps:

a) mixing the powder particles of mineral fillers in an aqueous solution of a polysaccharide polymer;

b) dripping the suspension obtained in step a) into an acidic aqueous solution, or vice versa to solidify a plurality of microgranules, the microgranules comprising an aggregation of powder particles of mineral fillers and of the polysaccharide polymer;

c) recovering the plurality of solid microgranules obtained in step b);

d) washing the plurality of microgranules;

e) drying the plurality of microgranules.

EP 4 108 644 A1

(52) Cooperative Patent Classification (CPC): (Cont.)

C-Sets
**C04B 26/28, C04B 14/305, C04B 20/008;**
**C04B 28/04, C04B 14/305, C04B 24/38,**
**C04B 2103/10, C04B 2103/20, C04B 2103/30,**
**C04B 2103/32, C04B 2103/44, C04B 2103/46,**
**C04B 2103/50, C04B 2103/65;**
**C04B 28/04, C04B 18/022, C04B 2103/10,**
**C04B 2103/20, C04B 2103/30, C04B 2103/32,**
**C04B 2103/44, C04B 2103/46, C04B 2103/50,**
**C04B 2103/65**

## Description

The present invention concerns a method of microgranulation of powder particles of mineral fillers, particularly powder particles of mineral fillers with photocatalytic activity for construction use.

The present invention also concerns a photocatalytic cement material, particularly cement, binder, plaster, cement paint, mortar and concrete for vertical and horizontal applications, both ready-mixed and precast, containing the microgranules obtained with the aforesaid method.

BACKGROUND

Mixed powders of various chemical compositions are found on construction sites.

By way of example, in some types of cement, there are fine powders of mineral fillers such as pozzolans, limestone, metakaolin, silica-calcareous fillers, pigments of an inorganic, organic or hybrid nature (wherein hybrid is understood to mean formed by at least two constituents at a nanometric or molecular level and wherein one of these constituents is of an inorganic nature and the other of an organic nature), slag, fly ash and silica fume that contribute to the hydration reaction of the cement.

With regard to the construction sites where works are being carried out in connection with thermal insulation, it is possible to identify high amounts of powders of mineral fillers containing calcium silicates, which mixed, usually with sand, lime and cellulose, act as a hygro-regulating and anti-humidity material.

In addition, new types of cement combined with powders of mineral fillers comprising compounds having photocatalytic activity, in particular titanium dioxide powders ($TiO_2$) are being tested and used for some years, which, with the traditional characteristics of mechanical resistance and durability, associate properties of ecological and aesthetic value.

$TiO_2$ is in fact a white pigment and a semiconductor oxide endowed with a high reactivity that allows it to be chemically activated by sunlight and participate in surface photochemical processes, exhibiting therefore excellent photocatalytic properties.

Because of its reactivity, it has been the subject of much research in order to be used as a component of photocatalytic cement matrices used both to help reduce pollutants present in the environment, thanks to the ability to accelerate the oxidation of organic pollutants that are deposited, for example, on the external walls of buildings, and to preserve the aesthetic quality of artefacts produced with these materials over time.

In particular, document WO 98/05601 describes cement materials comprising $TiO_2$ powder particles predominantly in the form of anatase, capable of photo-oxidizing the pollutants present in the environment in order to prolong the preservation of the original colour of the material once laid.

Document WO 01/00541, on the other hand, concerns the use of specific additives to achieve a cement-based paint with photocatalytic properties. Again, in document WO2019043598 blocks and slabs are described, in WO2004074202 photocatalytic flooring, in EP3216771 compositions also containing graphene, and finally in WO2009013337 cement coatings with improved rheology.

In all these known applications, titanium dioxide is added to the hydraulic binders in bulk, in powder form, whether it comes to cement, mortar, concrete or to special artefacts such as self-locking screeds.

The term "powder" has no precise scientific meaning; in general, "powder" means a solid reduced to powder or to tiny particles.

The sizes of the powder particles are the most important parameter for describing their specific functionalities along with the nature of the powder itself in determining their hazardousness.

In general, airborne solid powder particles with a diameter comprised between 0.1 and 100 microns ($\mu$m), particularly with a diameter comprised between 0.1 and 2.5 $\mu$m, can enter the respiratory tract (inhalable fraction) of a construction worker and cause the irritation of the first respiratory tract, which can degenerate with continued exposure.

The standard EN 481:1994 "Atmosphere in the working environment" dictates the definition of particle size fractions for the measurement of airborne particles defining the size fractions of aerosols that are deposited along the human respiratory tract.

The need is therefore particularly felt to be able to minimize the use of powders having such sizes, especially in workplaces where the end product is industrialised, particularly in the construction sector, to eliminate the health consequences due to the exposure to such powders.

On the other hand, however, for certain types of powders, the particle sizes cannot be modified so as not to compromise the peculiar chemical-physical properties of these particles.

An example of such types of powders comprises the powders of mineral fillers mentioned above, which relate to important additives in the field of the constructions where their function (e.g. to increase the mechanical strength or fluidity of the composition containing them) is closely correlated to their micro/nanometric sizes, such as for example fly ash, silica-calcareous fillers, silica fume and others.

A further example of such types of powders comprises the powders of mineral fillers of compounds having photocatalytic activity, such as $TiO_2$, which must possess nano- or micrometre sizes to perform their function.

For example, in the case of $TiO_2$, it was found that its photocatalytic activity is only guaranteed when the powder particles of the dioxide are less than about 5 $\mu$m, preferably less than 2-2.5 $\mu$m. Above this value, the photocatalytic capacity of the dioxide drops dramatically.

For $TiO_2$, in order to overcome these drawbacks, it is known to perform the granulation of the titanium dioxide powder to increase the sizes of the solid $TiO_2$ particles that might come into contact with the construction worker. Known processes of granulation of fine powders involve using a solution of alginate and CaCl2, as is described in the prior art document CN 107828378. Basically, the polymer chains of alginate are reacted with the calcium ions present in the solution, by cross-linking between the polymer chains and thus forming the matrix of the granule.

Disadvantageously, the granules obtained with such processes are not suitable for use in cement compositions because, for the same amount of added photocatalytic compound, such compositions do not exhibit an adequate photocatalytic activity.

Without wishing to be bound by any theory, it is assumed that this is probably due to dispersion issues.

These granules are, in fact, highly resistant to the physical-chemical changes occurring in their surroundings thanks to the ion-mediated polymer cross-linking.

In particular, when such granules are mixed with a cement matrix, whose pH is very basic, they do not disintegrate and do not allow $TiO_2$ powder particles to be released into the matrix.

However, to perform its function as a photocatalyst, $TiO_2$ must be available within the cement matrix in order to react with the photons and be activated.

The presence of the cross-linking between calcium and alginate therefore protects $TiO_2$ from the external environment, but at the same time it prevents its activation as a photocatalyst and thus its use in photocatalyst cement materials.

The prior art document CN 107467672 does not belong to the technical construction sector but to the pharmaceutical/food sector. In any case, it describes a process for preparing ferrous iron gel microspheres in order to prevent the latter from oxidising to ferric iron and adversely affecting the colour, the stability and the palatability of medicines or foods that contain it. The aforesaid process essentially envisages mixing alginate with the ferrous ion, adding a vegetable oil or a triglyceride and a hydrochloric acid solution to the ferrous ion solution. As indicated in the examples of the aforesaid document and in the figures, this process produces iron gel microspheres that are stable at basic pH, i.e. microspheres that are unable to release the ferrous ion at basic pH.

In light of what is indicated, it is evident that it is necessary to identify new methods for producing solid particles of fine powders for construction, and therefore new cement compositions containing the aforesaid particles of fine powders, which overcome the drawbacks mentioned.

In particular, there is a need for new solid particles of mineral fillers having sizes such that they are not inhaled by the construction worker when they are handled, but which at the same time are able to return to their original micro/nanometric size when they are mixed in construction compositions, such as for example in cement matrices, and thus be able to perform their function.

It is therefore an object of the present invention to provide a new method of microgranulation of powder particles of mineral fillers for construction, in particular of powder particles of mineral fillers having photocatalytic activity. It is an object of the present invention that the microgranules of powder particles of mineral fillers obtained with the aforesaid method have sizes suitable to prevent their inhalation when they are handled by the construction operator but which, at the same time, when they are mixed with the construction materials, e.g. cement matrices, are able to "return" to their original micro/nanometric size, thus preserving their specific function and, in the case of mineral fillers having photocatalytic activity, the photocatalytic activity.

Particularly, it is an object of the present invention that such a method makes it possible to produce microgranules that preserve the functionality of the powder particles of mineral fillers, and in particular the photocatalytic activity when it comes to photocatalyst compounds, at a basic pH, such as for example the pH present in cement-type matrices.

It is also an object of the present invention the use of such microgranules of powder particles of mineral fillers in cement materials.

It is further an object of the present invention to produce a cement composition, preferably a photocatalytic cement composition, containing such microgranules of powder particles of mineral fillers in cement materials.

A further object of the present invention is to produce a dry, photocatalytic premix containing such microgranules of powder particles, in particular $TiO_2$ powder particles.

Last but not least, it is an object of the present invention to produce an artefact obtained from a photocatalytic cement material containing the aforesaid microgranules of powder particles, in particular of $TiO_2$.

Said objects are achieved by a method of microgranulaton of powder particles of mineral filles for construction, preferably $TiO_2$ powder particles, in accordance with independent claim 1.

The objects are also achieved by the use of the microgranules obtained with the aforesaid method to produce a cement photocatalytic composition, as reported in claim 10, a photocatalytic dry premix in accordance with claim 12, and a photocatalytic cement artefact in accordance with claim 15.

Further features of the invention are described in the dependent claims.

The features and advantages of the present invention will be apparent from the detailed description reported below, and from the embodiments provided by way of illustration and not limitation.

DETECTED DESCRIPTION OF THE INVENTION

The Applicant has surprisingly discovered that it is possible to carry out the granulation of fine powders of mineral fillers used in construction, in particular of fine powders of mineral fillers having photocatalytic action, obtaining microgranules whose sizes are greater than those of the particles of the starting fine powder, in order to overcome the health drawbacks due to the exposure of the construction workers to the micrometric particles of these fine powders and, at the same time, guaranteeing at basic pH the "release" of the powders of mineral fillers at the original micro/nanometric sizes, thus maintaining their specific activity unchanged. These advantages are obtained by a method of microgranulation of powder particles of mineral fillers for construction, comprising the following steps:

a) mixing the powder particles of mineral fillers in an aqueous solution of at least a polysaccharide polymer;

b) dripping the suspension obtained in step a) into an acidic aqueous solution, or vice versa dripping an acidic aqueous solution into the suspension obtained in step a) to achieve solidification of a plurality of microgranules, wherein such microgranules of the plurality of microgranules comprise an aggregation of powder particles of mineral fillers and of the polysaccharide polymer;

c) recovering said plurality of solid microgranules obtained in step b);

d) washing the aforesaid plurality of microgranules;

e) drying said plurality of microgranules.

The term "mineral fillers" essentially refers to the auxiliary substances and/or the additives used in the construction field, having, by way of non-limiting example, the function of fluidizers, of increase of mechanical strength, of photocatalysts.

Preferably, such mineral fillers are selected from white cement, grey cement, fly ash, calcium silicates, calcium carbonates, pozzolans, limestone, metakaolin, silico-calcareous fillers, pigments of an inorganic, organic or hybrid nature (wherein hybrid is understood to mean formed by at least two constituents at a nanometric or molecular level, wherein one of said constituents is inorganic and the other is organic), slag, blast furnace slag, silica fume, compounds having photocatalytic activity and mixtures thereof. Particularly preferred is the use of powder particles of mineral fillers selected from white cement, grey cement, fly ash, calcium silicates, calcium carbonates, compounds having photocatalytic activity and mixtures thereof.

According to a preferred aspect of the method of the invention, the powder particles of mineral fillers are selected from the compounds having photocatalytic activity.

The term "compounds having photocatalytic activity" means any compound capable of oxidizing in the presence of light, oxygen and water the pollutants that come into contact with the particles of photocatalyst compound.

The term "pollutants" or "pollutants present in the environment" refers, in the present text, by way of example only, to organic pollutants such as aromatic condensation polymers, aldehydes, benzene, PM10-equivalent carbon black, and inorganic pollutants such as nitrogen oxides (NOx) and sulphur oxides (SOx) and carbon monoxide (CO).

According to a preferred aspect of the method of the present invention, the preferred powder particles of mineral fillers are the compounds having photocatalytic activity comprising particles of titanium dioxide or a precursor thereof.

More preferably, the powder particles of mineral fillers comprise at least 90% by weight of titanium dioxide particles, more preferably at least 95%, even more preferably at least 98% of titanium dioxide particles.

Advantageously, such particles may comprise 100% $TiO_2$ powder particles. Titanium dioxide can be used with any of its three different crystal structures, rutile, anatase and brookite, or in the amorphous phase.

Preferably, $TiO_2$ is found at least partially in the form of anatase.

By the expression "at least partially in the form of anatase" it is meant, in the present text, that the titanium dioxide particles have a structure of anatase at least for 5%, preferably for 25%, more preferably at least for 50%, even more preferably at least for 70%, as percentages by weight compared to the other structures present in the oxide itself.

Advantageously, titanium dioxide can have 100% of anatase structure. Returning to the method according to the invention, advantageously, the execution of step b) allows obtaining the substantial immediate solidification of the powder microgranules of mineral fillers of the invention.

This peculiar solidification speed of step b) allows obtaining microgranules formed by one or more powder particles of mineral fillers incorporated in a three-dimensional matrix of the polysaccharide polymer.

This polysaccharide polymer at acidic pH solidifies by incorporating the mineral fillers within its three-dimensional structure and increasing the sizes thereof accordingly.

In fact, the microgranule obtained from such solidification, comprising both the powder particle(s) of mineral fillers and the polysaccharide polymer, has larger sizes than the powder particles of mineral fillers used at the beginning of the method, thus overcoming one of the drawbacks related to the use of fine powder particles by construction workers.

Additionally, such a speed of the acid solution solidification reaction of the method of the invention allows making solid microgranules of powder particles and polymer in which the polymer chains are also able to "open" in a basic environment, such as for example in cement matrices, releasing the micro/nanometer-sized particles of powder of mineral fillers that were incorporated among its chains into the basic environment, and which are thus able to perform their function within the basic matrix, thereby achieving one of the objects of the present invention.

The term "basic environment" is understood in the present document to mean that the system containing the microgranules, and in which they are to perform their function, has a pH comprised between 9 and 14, preferably a pH comprised between 12 and 14.

Such a system is basically a mixture or composition for construction, such as for example a cement matrix.

According to the preferred embodiment of the method of the invention, step b) envisages dripping the suspension of powder particles of mineral fillers and polysaccharide polymer into the acidic aqueous solution.

Advantageously, the realisation of step b) of dripping the suspension of powder particles of mineral fillers and polysaccharide polymer in an acidic aqueous solution allows obtaining a higher solidification speed of the microgranules of the invention.

The microgranulation method of the invention therefore advantageously enables the particle sizes of the powder of mineral fillers to be increased so that they are not inhalable by the construction worker, and at the same time so as to ensure that these particles return to their original sizes, thus preserving their function when they are mixed with construction matrices having a basic pH.

Particularly advantageously, when such particles are $TiO_2$ powder particles, the microgranules obtained with the method of the invention comprising the dioxide are harmless to the construction worker who comes into contact with them and, at the same time, they preserve the photocatalytic capacity of $TiO_2$ when they are distributed in a basic pH matrix, such as for example a cement matrix, as shown by the results of the following examples.

According to one aspect of the method of the invention, the powder particles of mineral fillers used in step a) have average sizes less than or equal to 5 $\mu$m. Preferably, such powder particles of mineral fillers have average sizes comprised between 0.5 and 5 $\mu$m, more preferably comprised between 0.1 and 2.5 $\mu$m.

Since most of the aforesaid powder particles and microgranules is characterized by an irregular shape, the term "average sizes" refers to the average equivalent spherical diameter of the powder particles and of the microgranules of the invention.

When the powder particles of mineral fillers are $TiO_2$ powder particles with photocatalytic activity, they exhibit the aforesaid sizes indicated with a minimum percentage preferably of 94%.

In a further preferred aspect of the invention, the $TiO_2$ powder particles are the particles known by the name Pretiox AV03P, Pretiox AV01SF and Pretiox CG300, marketed by "Precheza a.s.".

Further, according to one aspect of the invention, the microgranules obtained with the method of the invention have average sizes greater than 10 $\mu$m, preferably greater than 60 $\mu$m, more preferably comprised between 60 $\mu$m and 5 mm.

It is not to be excluded that, according to alternative embodiments of the method of the invention, such powder particles of mineral fillers and/or the microgranules obtained with the method of the invention may have different average sizes than what is indicated.

Returning to the preferred embodiment of the method of the invention, the solidification step b) is particularly efficient in terms of the amount of microgranules obtained when the acidic aqueous solution has a pH comprised between 0.5 and 1.5.

Preferably, the pH of the acidic aqueous solution is about 1.

In fact, such pH values allow obtaining a complete and immediate solidification of the polysaccharide polymer in contact with the powder particle(s) of the mineral fillers.

According to one aspect of the method of the invention, the acidic aqueous solution is an aqueous solution of an inorganic acid or an organic acid.

In particular, when the acidic aqueous solution is an aqueous solution of an organic acid, the latter has a chemical formula comprising a number of carbon atoms less than or equal to 10.

Organic acids suitable for use in the method of the invention comprise, for example, acetic acid.

Inorganic acids suitable for use in the method of the invention comprise, but are not limited to, strong mineral inorganic acids such as for example hydrochloric acid, sulphuric acid and nitric acid.

Preferably, the acidic aqueous solution is an aqueous solution of an inorganic acid.

Hydrochloric acid is particularly preferred.

According to a preferred aspect not to be considered limiting, the acidic aqueous solution of hydrochloric acid has a concentration comprised between 50 and 500 mM.

It cannot be ruled out that, according to alternative embodiments of the method of the invention, the acidic aqueous solution is an acid solution other than what is indicated.

With regard to the polysaccharide polymer, according to the preferred embodiment of the method of the invention, it is selected from alginate, chitosan, cellulose, starch, natural gums and derivatives thereof.

Natural gums suitable for use in the method of the invention comprise, by way of non-limiting example, xanthan gum and gum arabic.

The use of alginate was particularly advantageous.

In fact, alginate exhibits a natural insolubility at acidic pHs, which favours its solidification during dripping in acidic aqueous solution and immediate solubilisation in a basic environment.

According to one aspect of the method of the invention, the suspension obtained in step a) has a mass/volume percentage concentration of polysaccharide polymer comprised between 0.1 and 1% m/V.

According to another aspect of the method of the invention, the suspension obtained in step a) has a mass/volume percentage concentration of powder particles of mineral fillers comprised between 1 and 50% m/V.

It is not excluded that, according to alternative embodiments of the method of the invention, these concentrations are different from what is indicated.

According to the preferred embodiment of the method of the invention, step c) of the recovery of the solid product is achieved by filtration of the suspension obtained in step b).

Preferably, such filtration is achieved by using sieves of the type per se known in the art.

Still according to the preferred embodiment of the method of the invention, the washing step d) is carried out with water, preferably demineralised water. According to the preferred embodiment of the method of the invention, the drying step e) is carried out by placing the washed microgranules in a temperature-controlled environment comprised between 35° and 55°C, preferably about 40-45°C, for a time of about 10-14 hours.

Preferably, this step e) is carried out by using drying stoves.

It is not excluded that, according to alternative embodiments of the method of invention, step c) and/or step d) is carried out in a manner different from what is reported above.

Furthermore, it is not excluded that, according to alternative embodiments of the method of the invention, step e) is carried out in a different way from what indicated, for example by using ovens and/or at temperatures and/or times other than those reported above.

Returning to the preferred embodiment of the method of the invention, subsequent to step e) there is a step f) of testing the release of powder particles of mineral fillers by the microgranules of the present invention, carried out at basic pH.

Preferably, this release test step f) is carried out in a solution having a pH comprised between 9 and 14, preferably a pH comprised between 12 and 14. The person skilled in the art is able to identify the best tests to be performed in order to evaluate the effectiveness of release of the powder particles of mineral fillers by the microgranules.

However, by way of non-limiting example, the aforesaid step f) can be carried out by adding a predefined amount of microgranules obtained with the method of the invention into a basic pH solution, under slow stirring, to assess the percentage of dissolution in a predefined time, preferably about one minute.

It is not excluded that, according to embodiment variants of the method of the invention, this step f) may be carried out in a different manner from what indicated, or that this step f) is not present.

Advantageously, with the method of the present invention it is possible to obtain a yield in percentage of microgranules ≥ 85%, preferably ≥ 90%, preferably ≥ 95%.

According to one aspect of the method of the invention, optionally, subsequent to drying step e), particularly between step e) and step f) when the latter is carried out, there is a step e1) which envisages grinding the plurality of dried microgranules.

Sometimes, in fact, depending on the experimental conditions followed and on the working environment, the microgranules obtained with the method of the invention may tend to aggregate during the aforesaid drying step e), forming compact blocks.

In such cases, it was therefore advantageous to carry out this grinding step e1) following the drying step e) in order to obtain the microgranules again in separate granular form and not in block form.

This step e1) is also advantageous if there is a need to modify the average sizes of the microgranules obtained according to the method of the invention.

Further, it is specified that in the embodiment of the method of the invention in which, during step b), the acidic aqueous solution is dripped into the suspension obtained in step a), the plurality of solidified microgranules that are obtained from said step b) tend to be aggregated among them forming one or more solidified blocks of clearly larger sizes than the single microgranule.

In this case, performing the grinding step e1) is particularly advantageous because it allows these aggregated microgranules to be separated into block(s), making them suitable for use in cement mixtures for construction, as will be indicated in more detail later.

It should be noted that, in the embodiment of the method of the invention in which during step b), such one or more blocks of microgranules are obtained, the subsequent steps of the method are carried out in a manner similar to what is described above for the preferred embodiment of the method of the invention.

Operationally, in fact, with this embodiment and by way of example, in step c), the plurality of solid microgranules obtained in step b) in the form of block(s) is recovered; in step d) the washing of the plurality of microgranules in the form of block(s) is carried out, and finally, in step e), the drying of the plurality of microgranules in the form of block(s) is carried out.

Microgranules of powder particles of mineral fillers and polysaccharide polymer obtained by the method having the characteristics described for the preferred embodiment of the invention, including variants, are also part of the present invention.

These microgranules are particularly suitable for producing cements and binders, dry premixes, cement compositions, plasters and cement paints, mortars and concretes for vertical and horizontal applications, both ready-mixed and precast.

The use of the microgranules of powder particles of mineral fillers, particularly microgranules of powder particles of mineral fillers with photocatalytic activity, obtained with the method of the present invention, for the preparation of a photocatalytic cement material is therefore also part of the present invention. A cement material in dry, photocatalytic form containing a plurality of microgranules obtained according to the invention is also part of the present invention.

Particularly advantageously, the microgranules contained in the cement material of the invention are microgranules of $TiO_2$ powder particles.

An artefact obtained from the aforesaid photocatalytic cement material containing a plurality of microgranules according to the invention, preferably a plurality of microgranules of titanium dioxide powder particles is still part of the present invention.

According to the invention, the amount of $TiO_2$ microgranules in the products of the present invention varies from 0.01% to 10% by mass with respect to the cement material, and preferably from 0.1% to 5% by mass with respect to the cement material before being granulated.

In the present text, the term "by mass" indicates that the microgranules of photocatalyst powder particles are added to the mass of the binder in the cement material according to the present invention and are therefore distributed over the entire mass, that is also in the inner and deeper layers, and not only over the surface.

The "cement material", to be used as a photocatalytic product once microgranules have been added according to the present invention, can be a "binder", a "hydraulic binder", a "dry premix" or a "cement composition".

Such cement material may be, preferably but not in a limiting manner, selected from cement, binder, plaster, cement paint, mortar and concrete for vertical and horizontal applications, both ready-mixed and precast, and contains the microgranules according to the invention.

In the present text, the term "binder" or "hydraulic binder" refers to a powder material in the solid, dry state, which when mixed with water provides plastic mixtures capable of hardening, even underwater, e.g. a cement.

The broad definition of "binder" or "hydraulic binder", according to the present invention, comprises both cements (white, grey, pigmented or mixtures thereof) as defined according to the aforesaid standard UNI EN 197.1, and the so-called cements for storage dams, cement agglomerates and hydraulic limescale as defined in Law no. 595 of 26 May 1965.

The term "dry premix" refers to a homogenous mixture adapted to be kneaded with water and provide "cement compositions" comprising at least one cement binder, one or more additives for cement compositions and, possibly, one or more aggregates.

The term "cement composition" (paints, plasters, mortars or concretes) refers to a composition in which a binder is mixed with water, possibly with aggregates of different grain size. The cement compositions of the invention thus comprise both cement "pastes", that is mixtures of binder and water, without aggregates, and the mixtures, that is mixtures comprising water.

The "aggregates", the "inert materials" or the "inert aggregates", synonymous with each other according to the present invention, can be fine aggregates, such as sands and fillers, and are defined in the standard UNI EN 206. Examples of mixtures are mortars (mixtures with binder, water and fine aggregate) and the concretes (mixtures with water, binder, fine aggregate and coarse aggregate). The aggregate is typically sandy, siliceous or calcareous, having for example particles with sizes comprised between 0.075 mm and 4 mm.

The "clinker" used to prepare a binder for the present invention is any Portland cement clinker as defined according to standard UNI EN 197.1, i.e. a hydraulic material of which at least two thirds by mass are composed of calcium silicates $(3CaO \; SiO_2)$ and $(2CaO \; SiO_2)$, the remaining part being composed of $Al_2O_3$, $Fe_2O_3$ and other oxides.

Additives may also be present in the cement materials of the present invention, which will be defined in detail below.

In particular, the cement composition according to the invention comprises a hydraulic binder, a microgranulated $TiO_2$-based photocatalyst prepared according to the method described above, water and at least one aggregate. The

term "TiO$_2$-based photocatalyst" means a plurality of microgranules of TiO$_2$ powder particles prepared with the method according to the preferred embodiment of the invention, including the variants.

Particularly, each of the aforesaid TiO$_2$-based photocatalyst microgranules is formed by one or more TiO$_2$ powder particles incorporated in a three-dimensional matrix of the polysaccharide polymer, preferably alginate. Advantageously, thanks to the microgranulation method of the invention, these microgranules are soluble at basic pH, preferably at pH comprised between 9 and 14, more preferably at pH comprised between 12 and 14, that is, the polysaccharide polymer chains are able to "open" in a basic environment releasing the TiO$_2$ powder particles that are incorporated among its chains, and are thus able to perform their photocatalyst function.

Preferably but not necessarily, the cement composition is in the form of paint, plaster, mortar or concrete.

An additive may be present in the cement composition according to the present invention.

The term "additive" in the present text means an additive as defined in the standard UNI EN 934-2:2012, preferably an accelerating, retarding, waterproofing, viscosifying, shrinkproofing, expanding, aerating and deaerating, water retaining, and water reducing additive.

The broad definition of "water reducing additive" according to the present invention comprises both normal-effective and high-effective water reducing additives, which can be respectively called "fluidifying" and "super-fluidifying" agents, as defined in standard UNI EN 934-2.

The dry premix according to the invention comprises a hydraulic binder, a microgranulated TiO$_2$-based photocatalyst prepared according to the method described for the preferred embodiment of the invention, including the variants. "Dry state" means the degree of humidity that does not significantly change the composition of the mixture.

This dry premix may optionally comprise an aggregate defined according to standard UNI EN 206 and/or an additive defined according to standard UNI EN 934-2:2012.

The hydraulic binder is a hydraulic binder according to standard UNI 197(1).

The dry premix may also comprise other fillers of mineral origin in addition to the photocatalyst or inorganic filler materials.

Examples of the aforesaid fillers of mineral origin are pozzolans, limestone, metakaolin, silica-calcareous fillers, pigments of inorganic, organic or hybrid nature (wherein hybrid is understood to mean formed by at least two constituents at a nanometric or molecular level, wherein one of these constituents is of an inorganic nature and the other of an organic nature), slag, blast furnace slag, fly ash and silica fume.

The cement material of the invention, particularly the cement compositions and the dry premix of the present invention, are used to produce cements and binders, plasters and cement paints, mortars and concretes for vertical and horizontal applications, both ready-mixed and precast, containing the aforesaid microgranules of the invention.

Additionally, the present invention comprises cement photocatalytic artefacts produced with a cement material as described above, in particular a cement artefact produced according to the cement compositions described above or according to the dry premix described above.

Further features and advantages of the method, of the microgranules, of the use of such microgranules and of the cement materials of the invention will be apparent to a person skilled in the art from the examples reported below, which are provided for the purpose of a better understanding of what is described and are not to be understood as limitations of the claims.

EXAMPLES

Example 1. Microgranulation of TiO$_2$ powder particles with the method of the present invention.

0.250 g of alginate were dissolved in 100 ml of demineralised water, obtaining a 0.25% solution.

20 g of TiO$_2$ in average-sized particles comprised between 0.1 to 2 $\mu$m were added to the aforesaid alginate solution, obtaining a 20% TiO$_2$ suspension. The obtained suspension was allowed to drip through two tested nozzles with sizes of 0.75 mm and 1 mm, into 300 ml of a 0.25M hydrochloric acid solution, under slow stirring.

At the end of the dripping step, it was waited for about 30 minutes in order to achieve complete solidification of the alginate. The obtained suspension was then filtered and washed in abundant mains water before being dried in a ventilated oven at 40°C for 12 hours.

The average sizes of the microgranules obtained were less than 1-2 mm.

The production yield was about 19.2 g, corresponding to more than 95%.

The obtained microgranules were able to dissolve almost instantaneously at 3% concentration in mains water at pH 12.5.

Example 2. Preparation of TiO$_2$ granules with a process of known type with calcium chloride.

0.5 g of alginate were dissolved in 100 ml of demineralised water obtaining a 0.5% solution.

20 g of TiO$_2$ were added to the aforesaid alginate solution, obtaining a 20% TiO$_2$ suspension.

The obtained suspension was allowed to drip into 400 ml of a 2% solution of calcium chloride, under slow stirring.

At the end of the dripping step, it was waited for about 60 minutes in order to achieve complete solidification of the alginate.

The obtained suspension was then filtered and washed in abundant mains water before being dried in a ventilated oven at 40°C for about 12 hours.

The average sizes of the microgranules obtained were less than 1-2 mm.

Example 3. Preparation of cement binders containing TiO$_2$ powder.

The preparation of the cement binder was made by mixing the raw materials in predetermined amounts according to the following instructions:

- 438.75 g of cement i.design ROCCABIANCA 42.5 R CEM II/B-LL 42.5 R white;
- 11.25 g of TiO$_2$ powder, non-microgranulated.

The two components were mixed in a Turbola mixer for a time equal to 30 min.

Example 4. Preparation of photocatalytic mortars with white binder.

The preparation of the cement mortars was made by mixing the raw materials in predetermined amounts, following the indications of the standard UNI EN 196-1:2016:

- 1350 g of standard sand;
- 450 g of hydraulic binder (containing 97.5% of i.design ROCCABIANCA 42.5 R CEM II/B-LL 42.5 R white and 2.5% of photocatalyst compound);
- 225 g of water.

The mortar samples produced for the execution of the photocatalytic tests were prepared using a percentage of photocatalyst compound (microgranules of the invention and not) equal to 2.5% with respect to the weight of the cement. The photocatalyst compound was used to replace the same amount of cement.

The cement mortars were prepared using the following photocatalyst compounds:

- GRAN-1A: microgranules according to example 1, formed by Pretiox AV01SF of Precheza a.s. and alginate;
- GRAN-1B: microgranules according to example 1, formed by Pretiox AV03P of Precheza a.s. and alginate;
- GRAN-1C: microgranules according to example 1, formed by Pretiox CG300 of Precheza a.s. and alginate;
- POLV-A: composite with TiO$_2$ powder Pretiox AV01SF of Precheza a.s. according to example 3;
- POLV-B: composite with TiO$_2$ powder Pretiox AV03P of Precheza a.s. according to example 3;
- POLV-C: composite with TiO$_2$ powder Pretiox CG300 of Precheza a.s. according to example 3.

After their preparation, the samples were stored in a climatic chamber (R.H. = 90% and T=20°C) for 28 days, and then placed in a standard environment (R.H. = 60% and T=20°C) until the photocatalytic tests were performed.

Example 5. Photocatalytic characterization of the cement mortars with white binder.

The photocatalytic activity of the microgranules obtained with the microgranulation method of the invention was experimentally verified by preparing the cement mortars according to what is reported in example 4, and subjected to NOx nitrogen oxide abatement measures carried out following the indications of the standard UNI 11247:2011.

Operationally, the mortar samples were placed inside a reaction chamber (with a volume of 3 litres) that can be irradiated through a UV lamp that has, at the sample level, a UV-band irradiance spectrum ($\lambda$< 400 nm) consisting mainly of the 365 nm mercury line (the integrated irradiance at $\lambda$< 350 nm must be less than 10% of the integrated irradiance between 350 nm and 400 nm).

The irradiation system must allow an average irradiance (in UV-A band) equal to 20$\pm$1 W/m$^2$ on the sample surface (of 64 cm$^2$) during the test run.

In the continuous procedure according to UNI 11247, the supply flow, equal to (1.5 litres/min), contains an amount of NOx of 0.55 ppm (of which NO$_2$=0.15 ppm and NO=0.4 ppm).

The concentration of NOx present in the gas passing through the reactor is measured in the dark during the first step of the test (C$_B$) and by irradiating the sample with UV light during the second step (C$_L$).

The difference in concentration of the NOx measured between the two steps makes it possible to calculate the dimensionless photocatalytic abatement index Ac, as reported below:

$$Ac = 100 \times [(C_B - C_L)/C_B] \times (I_N/I_{IR}) \times (S_N/S_A)$$

wherein:

$A_C$ = dimensionless abatement index under test conditions (%);
$C_B$ = concentration of NOx at the exit from the reactor in the dark (ppb);
$C_L$ = concentration of NOx at the exit from the irradiated reactor (ppb);
$I_{IR}$ = measured and possibly corrected average irradiance (W m$^{-2}$);
$I_N$ = nominal irradiance (20 W m$^{-2}$);
$S_A$ = measured sample area (64 $\pm$ 6 cm$^2$);
$S_N$ = nominal sample area (64 cm$^2$).

The results obtained are reported in Table 1.

Table 1

| Number | Photocatalyst compound used for the preparation of the photocatalytic mortar with white binder | Ac (%) |
|---|---|---|
| 1 comparison | POLV-A | 31 |
| 2 comparison | POLV-B | 30 |
| 3 comparison | POLV-C | 30 |
| 4 | GRAN1-A | 33 |
| 5 | GRAN1-B | 32 |
| 6 | GRAN1-C | 31 |

As can be noted from the experimental data, the microgranulation method according to example 1 of the invention made it possible to produce photocatalytic mortars with Ac values similar/greater than the reference samples produced with TiO$_2$ powder according to example 3, i.e. not microgranulated and, as can be seen from the following Table 2, with Ac values greater than the reference samples produced with TiO$_2$ granules obtained with the per se known microgranulation method according to example 2.

Example 6. Preparation of photocatalytic mortars with white binder and TiO$_2$ powder or with granulated TiO$_2$ obtained according to example 2.

The preparation of the cement mortars was made by mixing the raw materials in predetermined amounts, following the indications of the standard UNI EN 196-1:2016:

- 1350 g of standard sand;
- 450 g of hydraulic binder (containing 97.5% of i.design ROCCABIANCA 42.5 R CEM II/B-LL 42.5 R white and 2.5% granulated or powdered photocatalyst compound);
- 225 g of water.

The mortar samples produced for the execution of the photocatalytic tests were prepared using a percentage of photocatalyst compound equal to 2.5% with respect to the weight of the cement. The photocatalyst compound was used to replace the same amount of cement.
The cement mortars were prepared using the following photocatalyst compounds:

- POLV-A: composite with TiO$_2$ powder Pretiox AV01SF of Precheza a.s. according to example 3;
- GRAN-2A: granulated composite according to example 2, formed by Pretiox AV01SF of Precheza a.s. calcium chloride and alginate.

After their preparation, the samples were stored in a climatic chamber (R.H. = 90% and T=20°C) for 28 days, and then placed in a standard environment (R.H. = 60% and T=20°C) until the photocatalytic tests were performed.

Example 7. Photocatalytic characterization of cement mortars with white binder obtained in example 6.

The photocatalytic activity of the photocatalyst compounds obtained according to examples 2 and 3 were experimentally verified by preparing cement mortars according to what is reported in example 6. These cement mortars in example 6 were subjected to NOx nitrogen oxide abatement measures carried out following the indications of standard UNI 11247:2011 and according to the operating protocol reported for example 5.

The results obtained are shown in Table 2.

Table 2

| Number | Photocatalyst compound used for the preparation of the photocatalytic mortar with white binder | Ac (%) |
|---|---|---|
| 1 comparison | POLV-A | 31 |
| 2 | GRAN2-A | 13 |

As can be noted from the experimental data shown in Table 2, the granulation process of the per se known type, according to example 2, was not effective for the production of photocatalytic mortars. The Ac values obtained for the photocatalytic mortars containing the $TiO_2$ granules according to example 2 are in fact lower than the values obtained with the reference samples produced with $TiO_2$ powder and, moreover, are lower than those of the samples prepared according to the method of the invention in example 1 (see the data in Table 1).

Example 8. Preparation of photocatalytic mortars with grey binder.

The preparation of the cement mortars with grey binder was made by mixing the raw materials in predetermined amounts, following the indications of the standard UNI EN 196-1:2016:

- 1350 g of standard sand;
- 450 g of hydraulic binder (containing 97.5% of i.work TECNOCEM A-LL 42.5 R grey and 2.5% photocatalyst compound in microgranules or powdered form);
- 225 g of water.

The mortar samples produced for the execution of the photocatalytic tests were prepared using a percentage of photocatalyst compound (microgranulated and not) equal to 2.5% with respect to the weight of the cement. The photocatalyst compound was used to replace the same amount of cement.

The cement mortars were prepared using the following photocatalyst compounds:

- GRAN-1A: microgranules according to example 1, formed by Pretiox AV01SF of Precheza a.s. and alginate;
- GRAN-1B: microgranules according to example 1, formed by Pretiox AV03P of Precheza a.s. and alginate;
- GRAN-1C: microgranules according to example 1, formed by Pretiox CG300 of Precheza a.s. and alginate;
- POLV-A: composite with the titanium dioxide powder Pretiox AV01SF of Precheza a.s. according to example 3;
- POLV-B: composite with the titanium dioxide powder Pretiox AV03P of Precheza a.s. according to example 3;
- POLV-C: composite with the titanium dioxide powder Pretiox CG300 of Precheza a.s. according to example 3.

After their preparation, the samples were stored in a climatic chamber (R.H. = 90% and T=20°C) for 28 days, and then placed in a standard environment (R.H. = 60% and T=20°C) until the photocatalytic tests were performed.

Example 9. Photocatalytic characterization of the cement mortars with grey binder.

The photocatalytic activity of the photocatalyst compounds obtained according to examples 1 and 3 was experimentally verified by preparing cement mortars in accordance with what is reported in example 8. These cement mortars were subjected to NOx nitrogen oxide abatement measures carried out following the indications of standard UNI 11247:2011 and according to the operating protocol reported in example 5.

The results obtained are shown in Table 3.

Table 3

| Number | Photocatalyst compound used for the preparation of the photocatalytic mortar with grey binder | Ac (%) |
|---|---|---|
| 1 comparison | POLV-A | 28 |
| 2 comparison | POLV-B | 26 |
| 3 comparison | POLV-C | 27 |
| 4 | GRAN1-A | 30 |
| 5 | GRAN1-B | 28 |
| 6 | GRAN1-C | 28 |

As can be seen from the experimental data shown in Table 3, the microgranulation method of the invention enabled the production of photocatalytic mortars with grey binder with Ac values similar to/greater than the reference samples produced with $TiO_2$ powder.

Example 10. Microgranulation of fly ash powder particles with the method of the present invention and basic pH release test.

0.250 g of alginate were dissolved in demineralised water thereby obtaining a solution of alginate in water at 0.25%. 20 g of fly ash in average-sized particles comprised between 1 and 2.5-5 $\mu$m were added to the aforesaid alginate solution thereby obtaining a suspension at 20%.

The obtained suspension was allowed to drip through a tested nozzle with sizes of 1 mm, into 500 ml of a 0.25 M hydrochloric acid solution, under slow stirring.

At the end of the dripping step, it was waited for 30 minutes. After washing the formed microgranules with running water, they were dried in a stove at 35°C for 24 hours.

The average sizes of the microgranules obtained were less than 1-3 mm.

The microgranules obtained were able to dissolve almost instantaneously at a concentration of 15% fly ash in mains water at pH 13.

Example 11. Microgranulation of fly ash powder particles with a known method using calcium chloride and basic pH release test.

0.250 g of alginate were dissolved in demineralised water thereby obtaining a solution of alginate in water at 0.25%. 20 g of fly ash (average sizes comprised between 1 and 2.5-5 $\mu$m) were added to the alginate solution thereby obtaining a suspension at 20%.

The obtained suspension was allowed to drip through a tested nozzle with sizes of 1 mm, into 500 ml of a 2% calcium chloride solution.

At the end of the dripping step, it was waited for 30 minutes. After washing the formed microgranules with running water, they were dried in a stove at 35°C for 24 hours.

The microgranules obtained having average sizes of about 0.5-3 mm were not able to dissolve at a concentration of 3% in mains water at pH 13.

Therefore, based on the above, the present invention has achieved all the predetermined objects.

In particular, the object of providing a new method of microgranulation of fine powder particles of mineral fillers for construction, in particular of powder particles of mineral fillers of compounds having photocatalytic activity, is achieved.

Again, thanks to the method of the present invention, the powder particles of mineral fillers preserve their special functions; specifically, when these mineral fillers are particles of photocatalytic compounds, they preserve this photocatalytic activity during microgranulation.

In addition, the microgranules obtained with the method of the present invention preserve the functionality of the powder particles of mineral fillers even at the basic pH typical of cement-type matrices.

Additionally, the microgranules of powder particles of mineral fillers obtained with the method of the present invention are suitable for use in cement materials.

Again, the object of producing a cement material, in particular a photocatalytic cement composition and a dry premix, containing the microgranules of powder particles, in particular microgranules of $TiO_2$ powder particles, was achieved. Last but not least, the object of producing an artefact obtained from the photocatalytic cement material containing the aforesaid microgranules of $TiO_2$ powder particles is achieved.

**Claims**

1. Method of microgranulation of powder particles of mineral fillers for construction, **characterized in that** it comprises the following steps:

   a) mixing said powder particles of mineral fillers in an aqueous solution of a polysaccharide polymer;
   b) dripping the suspension obtained in step a) into an acidic aqueous solution, or vice versa to solidify a plurality of microgranules, the microgranules of said plurality of microgranules comprising an aggregation of said powder particles of mineral fillers and said polysaccharide polymer;
   c) recovering said plurality of solid microgranules obtained in step b);
   d) washing said plurality of microgranules;
   e) drying said plurality of microgranules.

2. Method according to the preceding claim, **characterized in that** said powder particles of mineral fillers have average sizes comprised between 0.5 and 5 $\mu$m.

3. Method according to any one of the preceding claims, **characterized in that** said microgranules have average sizes comprised between 60 $\mu$m and 5 mm.

4. Method according to any one of the preceding claims, **characterized in that** said step b) envisages dripping said suspension obtained in step a) into said acidic aqueous solution.

5. Method according to any one of the preceding claims, **characterized in that** said powder particles of mineral fillers are selected from white cement, grey cement, fly ash, calcium silicates, calcium carbonates, pozzolans, limestone, metakaolin, silico-calcareous fillers, pigments of an inorganic, organic or hybrid nature (wherein hybrid is understood to mean formed by at least two constituents at a nanometric or molecular level, wherein one of said constituents is inorganic and the other is organic), slag, blast furnace slag, silica fume, compounds having photocatalytic activity and mixtures thereof, said compounds having photocatalytic activity preferably comprising titanium dioxide particles.

6. Method according to any one of the preceding claims, **characterized in that** said powder particles of mineral fillers are selected from compounds having photocatalytic activity.

7. Method according to the preceding claim, **characterized in that** said compounds having photocatalytic activity comprise titanium dioxide particles.

8. Method according to any one of the preceding claims, **characterized in that** said acidic aqueous solution is an aqueous solution of an inorganic acid or of an organic acid having a chemical formula comprising a number of carbon atoms less than or equal to 10, preferably an aqueous solution of an inorganic acid.

9. Method according to any one of the preceding claims, **characterized in that** said polysaccharide polymer is selected from alginate, chitosan, cellulose, starch, natural gums and derivatives thereof, said polysaccharide polymer being preferably alginate.

10. Cement composition comprising:

    i) a hydraulic binder;
    ii) a $TiO_2$-based photocatalyst;
    iii) water;
    iv) at least one aggregate;

    **characterized in that** said $TiO_2$-based photocatalyst is prepared according to the method of any one of claims 1 to 9, said $TiO_2$-based photocatalyst being formed by a plurality of microgranules of $TiO_2$ powder particles, each of said microgranules being formed by one or more $TiO_2$ powder particles incorporated in a three-dimensional matrix of polysaccharide polymer, said polysaccharide polymer being preferably alginate.

11. Cement composition according to the preceding claim, **characterized in that** said cement composition is in the form of paint, plaster, mortar or concrete.

12. Dry premix comprising:

   i) a hydraulic binder;
   ii) a $TiO_2$-based photocatalyst;

   **characterized in that** said $TiO_2$-based photocatalyst is prepared according to the method of any one of claims 1 to 9, said $TiO_2$-based photocatalyst being formed by a plurality of microgranules of $TiO_2$ powder particles, each of said microgranules being formed by one or more $TiO_2$ powder particles incorporated in a three-dimensional matrix of polysaccharide polymer, said polysaccharide polymer being preferably alginate.

13. Dry premix according to the preceding claim, **characterized in that** it further comprises an aggregate.

14. Dry premix according to any one of claims 12 or 13, **characterized in that** said hydraulic binder is a hydraulic binder according to the standard UNI 197(1), preferably a white, grey, pigmented cement or mixtures thereof.

15. Photocatalytic cement artefact produced according to the cement compositions of claims 10 or 11 or according to the dry premix of claims 12 to 14.

Europäisches
Patentamt

European
Patent Office

Office européen
des brevets

# EUROPEAN SEARCH REPORT

Application Number

EP 22 17 9705

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 107 828 378 A (ANHUI MINGNENG INSULATION TECH CO LTD) 23 March 2018 (2018-03-23) * the whole document * | 1-15 | INV. C04B26/28 C04B28/04 C04B103/00 |
| Y | CN 107 467 672 A (FERGUSON WUHAN BIOTECHNOLOGY CO LTD) 15 December 2017 (2017-12-15) * the whole document * | 1-9 | |
| Y,D | WO 98/05601 A1 (ITALCEMENTI SPA [IT]; CASSAR LUIGI [IT]; PEPE CARMINE [IT]) 12 February 1998 (1998-02-12) * the whole document * | 10-15 | |

TECHNICAL FIELDS
SEARCHED     (IPC)

C04B

The present search report has been drawn up for all claims

| Place of search | Date of completion of the search | Examiner |
|---|---|---|
| Munich | 21 October 2022 | Roesky, Rainer |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 17 9705

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2022

| Patent document cited in search report | | Publication date | Patent family member(s) | | Publication date |
|---|---|---|---|---|---|
| CN 107828378 | A | 23-03-2018 | NONE | | |
| CN 107467672 | A | 15-12-2017 | NONE | | |
| WO 9805601 | A1 | 12-02-1998 | AT | 415381 T | 15-12-2008 |
| | | | AT | 468306 T | 15-06-2010 |
| | | | AT | 481367 T | 15-10-2010 |
| | | | AT | 498596 T | 15-03-2011 |
| | | | AT | 531677 T | 15-11-2011 |
| | | | AU | 3940797 A | 25-02-1998 |
| | | | DK | 0946450 T3 | 09-05-2011 |
| | | | DK | 1535886 T3 | 09-03-2009 |
| | | | DK | 1564194 T3 | 13-02-2012 |
| | | | DK | 1600430 T3 | 23-08-2010 |
| | | | DK | 2100861 T3 | 10-01-2011 |
| | | | EP | 0946450 A1 | 06-10-1999 |
| | | | EP | 1535886 A2 | 01-06-2005 |
| | | | EP | 1564194 A2 | 17-08-2005 |
| | | | EP | 1600430 A1 | 30-11-2005 |
| | | | EP | 2008982 A2 | 31-12-2008 |
| | | | EP | 2100861 A1 | 16-09-2009 |
| | | | ES | 2318419 T3 | 01-05-2009 |
| | | | ES | 2345498 T3 | 24-09-2010 |
| | | | ES | 2352170 T3 | 16-02-2011 |
| | | | ES | 2360923 T3 | 10-06-2011 |
| | | | ES | 2376464 T3 | 14-03-2012 |
| | | | IT | MI961722 A1 | 07-02-1998 |
| | | | MA | 24297 A1 | 01-04-1998 |
| | | | PT | 946450 E | 25-05-2011 |
| | | | PT | 1535886 E | 06-03-2009 |
| | | | PT | 1564194 E | 02-03-2012 |
| | | | PT | 1600430 E | 24-08-2010 |
| | | | PT | 2100861 E | 20-12-2010 |
| | | | US | 6409821 B1 | 25-06-2002 |
| | | | WO | 9805601 A1 | 12-02-1998 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9805601 A
- WO 0100541 A
- WO 2019043598 A
- WO 2004074202 A
- EP 3216771 A
- WO 2009013337 A
- CN 107828378
- CN 107467672